# EUROPEAN PATENT APPLICATION

(11) **EP 3 015 329 A1**
(43) Date of publication of application: **04.05.2016**
(21) Application number: 15188694.2
(22) Date of filing: 07.10.2015
(51) Int. Cl.: B60T 17/02, B60T 13/46, F02M 25/08, F02M 35/10, F01M 13/02

(54) **VEHICLE WITH NEGATIVE PRESSURE INSTALLATION**

(30) Priority: 24.10.2014 JP 2014217587
(71) Applicant: Toyota Jidosha Kabushiki Kaisha, Toyota-shi, Aichi 471-8571 (JP)
(72) Inventor: DOKE, Toshio, Toyota-shi,, Aichi 471-8571 (JP); NISHIMURA, Yuusaku, Toyota-shi,, Aichi 471-8571 (JP); AKITA, Tatsuhiko, Toyota-shi,, Aichi 471-8571 (JP)
(74) Representative: TBK

(57) **Abstract**

The vehicle is provided with a canister (32), a fuel vapor treatment device (30), a brake booster (20), which has a constant pressure chamber (23, 24) to which a negative pressure is supplied and is actuated by using a negative pressure supplied to the constant pressure chamber (23, 24), and a negative pressure pump (50). The negative pressure pump (50) is provided with a suction port (53), which is connected to the canister (32) and to the constant pressure chamber (23, 24), and an ejection port (51), which is connected to the air intake passage (12). A second purge control valve (55A) for opening and closing a second purge passage (55) is installed in the second purge passage (55), which puts the canister (32) and the negative pressure pump (50) in communication. A negative pressure control valve (56A) is installed in a communication passage (56), which puts the constant pressure chamber (23, 24) and the negative pressure pump (50) in communication.

## Description

### BACKGROUND OF THE INVENTION

The present invention relates to a vehicle provided with a plurality of devices that use negative pressure.

A vehicle is provided with various types of devices that use the negative pressure of the intake air, that is, the pressure inside an air intake passage of an internal combustion engine, in addition to the internal combustion engine as a driving source.

For example, Japanese Laid-Open Patent Publication No. 2006-142942 discloses a brake device, which applies the brake to a vehicle. The brake device is provided with a brake booster. When the brake pedal is operated by a driver, negative pressure of the intake air is supplied to a pressure chamber of the brake booster, thereby assisting operation of the brake pedal. The brake device is also provided with a negative pressure pump. Therefore, when the pressure inside the air intake passage is increased to result in inability to use the negative pressure of the intake air, the negative pressure pump is actuated. Thereby, negative pressure produced by the negative pressure pump is supplied to the pressure chamber of the brake booster.

On the other hand, Japanese Laid-Open Patent Publication No. 2008-95564 discloses a fuel vapor treatment device that releases fuel vapor produced inside a fuel tank into the air intake passage of an internal combustion engine. The fuel vapor treatment device is provided with a canister, which adsorbs and collects the fuel vapor, and a purge passage, which puts the canister and the air intake passage in communication. In this device, due to a difference in internal pressure between the air intake passage and the canister, gas containing fuel vapor inside the canister (purge gas) is released via the purge passage into the air intake passage. The fuel vapor treatment device is also provided with a positive pressure pump. The positive pressure pump is used in determining the existence of abnormal leakage of a purge gas from a portion of the fuel vapor treatment device. In order to determine the existence of abnormal leakage, first, pressure produced by the positive pressure pump is supplied to increase the internal pressure of the fuel vapor treatment device. Thereafter, actuation of the positive pressure pump is stopped and the internal pressure of the fuel vapor treatment device is monitored.

When the above-described brake device and the fuel vapor treatment device are both installed in a vehicle, two pumps, such as a negative pressure pump and a positive pressure pump, are needed. Thus, the vehicle is complicated in structure.

The above-described problem is common in vehicles provided with a plurality of devices that use negative pressure, such as an actuator that is actuated by a supply of negative pressure and a blow-by gas treatment device, which uses a negative pressure to release blow-by gas inside an engine into an air intake passage.

### SUMMARY OF THE INVENTION

In order to solve the above-described problem, according to a first mode of the present invention, there is provided a vehicle that has an internal combustion engine, a plurality of devices that use negative pressure, a negative pressure pump, which produces negative pressure, wherein the negative pressure pump has an ejection port, which is connected to an air intake passage of the internal combustion engine, and a suction port, which is connected to each of the plurality of devices. The vehicle further includes a plurality of communication passages, which put the plurality of devices and the suction port of the negative pressure pump in communication, and a plurality of control valves, each of which is installed in a respective one of the plurality of communication passages to open and close the respective one of the plurality of communication passages.

### BRIEF DESCRIPTION OF THE DRAWINGS

Fig. 1 is a schematic configuration diagram that shows a vehicle according to a first embodiment of the present invention.
Fig. 2 is a cross-sectional pattern diagram that shows a brake booster.
Fig. 3 is a flow chart that shows procedures for performing purge treatment.
Fig. 4 is a graph that shows one example of a relationship between the pressure of the intake air and an amount of purge.
Fig. 5 is a flow chart that shows procedures for performing negative pressure supply treatment.
Fig. 6 is a schematic configuration diagram that shows a vehicle according to a second embodiment of the present invention.
Fig. 7 is a flow chart that shows procedures for performing blow-by gas treatment.
Fig. 8 is a schematic configuration diagram that shows a vehicle according to another embodiment.
Fig. 9 is a schematic configuration diagram that shows a vehicle according to the other embodiment.

### DETAILED DESCRIPTION OF THE PREFERRED EMBODIMENTS

### (First embodiment)

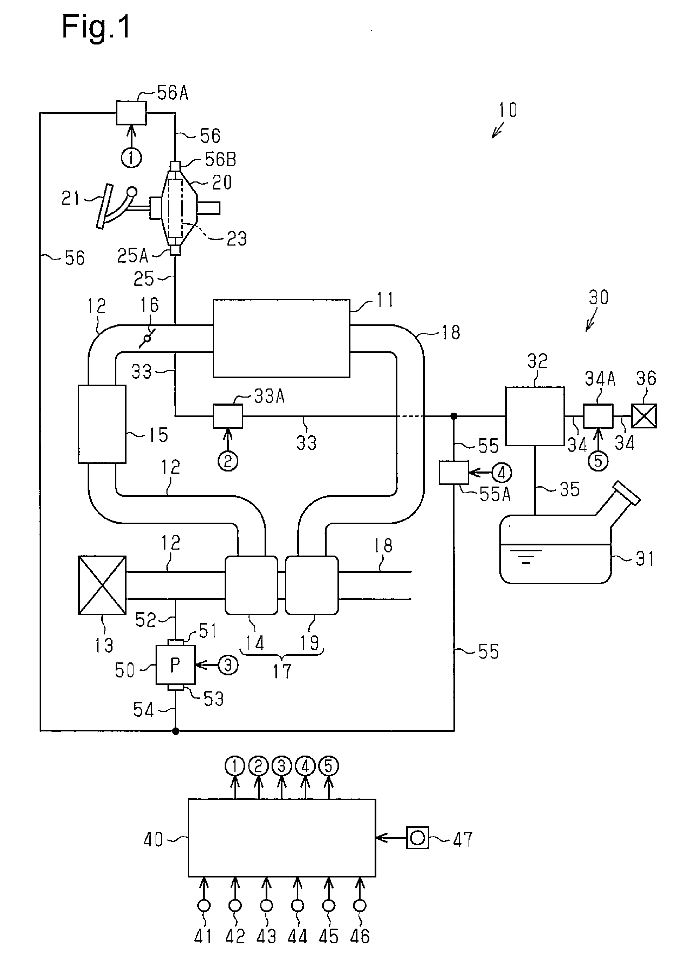

Hereinafter, the first embodiment, which specifically embodies a vehicle of the present invention, will be described with reference to Fig. 1 to Fig. 5.

As shown in Fig. 1, a vehicle 10 is provided with an internal combustion engine 11 as a driving source. An air filter 13, a compressor 14, an intercooler 15 and a throttle valve 16 are installed in that order from an upstream end of an air intake passage 12 of the internal combustion engine 11. The air filter 13 filters air that enters the air intake passage 12. The compressor 14 is a part of an exhaust drive type forced-induction device 17. The forced-induction device 17 is provided with an exhaust turbine 19, which is installed on an exhaust passage 18 of the internal combustion engine 11, in addition to the compressor 14. When a large amount of exhaust air passes through the exhaust turbine 19 during operation of the internal combustion engine 11, intake air, which flows through the air intake passage 12, is fed under pressure by the compressor 14 and forcibly delivered into a cylinder of the internal combustion engine 11. The intercooler 15 is a heat exchanger that cools the intake air through heat exchange with outdoor air. The throttle valve 16 adjusts the amount of air that is introduced into the cylinder of the internal combustion engine 11 via the air intake passage 12.

A brake booster 20 is installed on the vehicle 10. Basically, the brake booster 20 uses negative pressure of the intake air which is the pressure at a portion of the air intake passage 12 at a downstream side of the throttle valve 16, thereby boosting and transmitting an operation force of a brake pedal 21.

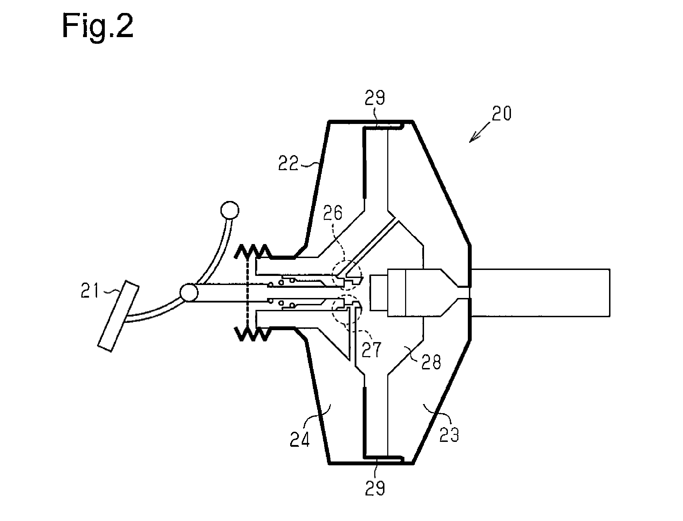

As shown in Fig. 1 and Fig. 2, the interior of a case 22 of the brake booster 20 is divided into two pressure chambers, that is a constant pressure chamber 23 and a pressure changing chamber 24. The constant pressure chamber 23 is put in communication with a portion of the air intake passage 12 at a downstream side of the throttle valve 16 via a first brake passage 25 and a check valve 25A. Therefore, when the pressure of the intake air Pa at a portion of the air intake passage 12 downstream of the throttle valve 16 is lower than the pressure at the constant pressure chamber 23, the check valve 25A is opened to supply negative pressure (more specifically, pressure lower than the atmospheric pressure) to the constant pressure chamber 23. On the other hand, when the pressure of the intake air Pa is equal to or higher than the pressure at the constant pressure chamber 23, the check valve 25A is closed and no negative pressure is supplied to the constant pressure chamber 23. As described so far, the negative pressure is supplied to the constant pressure chamber 23 of the brake booster 20 by using the negative pressure of the intake air.

Further, two valves, that is, a vacuum valve 26 and a breather valve 27 are installed inside the brake booster 20. When the vacuum valve 26 is opened, the constant pressure chamber 23 is put in communication with the pressure changing chamber 24. When the vacuum valve 26 is closed, communication of the constant pressure chamber 23 with the pressure changing chamber 24 is disconnected. When the breather valve 27 is opened, the pressure changing chamber 24 is exposed to the atmosphere.

Still further, a piston 28 and a diaphragm 29 are arranged inside the brake booster 20. The diaphragm 29 extends between an external face of the piston 28 and an internal face of the case 22. The interior of the brake booster 20 is divided into the constant pressure chamber 23 and the pressure changing chamber 24 by the piston 28 and the diaphragm 29. The piston 28 is coupled to the brake pedal 21. The piston 28 is arranged to move by operation of the brake pedal 21 (by the driver's foot).

When the brake pedal 21 is not stepped on, the vacuum valve 26 is opened and also the breather valve 27 is closed. At this time, the constant pressure chamber 23 is put in communication with the pressure changing chamber 24, by which the negative pressure of the intake air of the internal combustion engine 11 is supplied to the interior thereof. Therefore, the constant pressure chamber 23 is substantially equal in pressure to the pressure changing chamber 24.

When the brake pedal 21 is operated, the piston 28 moves, by which the vacuum valve 26 is closed and also the breather valve 27 is opened. At this time, communication of the constant pressure chamber 23 with the pressure changing chamber 24 is disconnected and also the pressure inside the pressure changing chamber 24 gradually comes close to an atmospheric pressure. As a result, the pressure of the pressure changing chamber 24 is higher than the pressure of the constant pressure chamber 23. Then, the piston 28 is pressed due to a difference in pressure between the constant pressure chamber 23 and the pressure changing chamber 24, thereby assisting the operation of the brake pedal 21.

As shown in Fig. 1, the vehicle 10 is provided with a fuel vapor treatment device 30, which releases fuel vapor produced inside a fuel tank 31, more particularly, a purge gas, which is gas containing fuel vapor, into the air intake passage 12 of the internal combustion engine 11. The fuel vapor treatment device 30 is provided with a canister 32, which collects fuel vapor produced at the fuel tank 31, a first purge passage 33, which releases the collected fuel vapor into the air intake passage 12 for cleaning (purge), and an atmospheric air passage 34, which introduces atmospheric air into the canister 32 on purge.

Activated carbon is filled inside the canister 32 as an adsorbent for adsorbing fuel vapor. The canister 32 is connected via the first purge passage 33 to a portion of the air intake passage 12 at a downstream side of the throttle valve 16. A first purge control valve 33A for opening and closing the first purge passage 33 is installed on the first purge passage 33.

Further, the canister 32 is connected via a vapor passage 35 to the fuel tank 31. Fuel vapor inside the fuel tank 31 is introduced via the vapor passage 35 into the canister 32.

Still further, the atmospheric air passage 34 is connected to the canister 32. An atmospheric-air releasing valve 34A and a filter 36 are attached on the atmospheric air passage 34. When an operation switch 47 is operated by a driver and turned on to start operation of the vehicle 10, the atmospheric-air releasing valve 34A is opened. When the operation switch 47 is operated and turned off to stop the operation of the vehicle 10, the atmospheric-air releasing valve 34A is closed. Therefore, upon release of a purge gas during operation of the vehicle 10, when the pressure inside the canister 32 is lower than an atmospheric pressure, atmospheric air that has been filtered through the filter 36 is introduced via the atmospheric air passage 34 into the canister 32. On the other hand, when the pressure inside the canister 32 is higher than the atmospheric pressure, air inside the canister 32 is filtered through the filter 36 and, thereafter, discharged into the atmosphere via the atmospheric air passage 34.

Upon production of fuel vapor inside the fuel tank 31, the fuel vapor is introduced into the canister 32 via the vapor passage 35 and temporarily adsorbed on an adsorbent inside the canister 32. On the other hand, when the first purge control valve 33A is opened during operation of the internal combustion engine 11, the negative pressure of the intake air in the air intake passage 12 is supplied to the first purge passage 33. In addition to supply of the negative pressure of the intake air to the first purge passage 33, atmospheric air is introduced via the atmospheric air passage 34 into the canister 32. Thereby, the fuel vapor inside the canister 32 is separated from the adsorbent by the thus introduced atmospheric air and also released into the air intake passage 12 via the first purge passage 33 and subjected to purge treatment.

As various types of sensors for detecting an operation state of the vehicle 10, the vehicle 10 is provided with a vehicle speed sensor 41 for detecting a traveling speed (vehicle speed SPD) of the vehicle 10, a pressure sensor 42 for detecting an internal pressure (booster pressure Pb) of the constant pressure chamber 23 of the brake booster 20, a pressure sensor 43 for detecting the pressure (pressure of the intake air Pa) at a portion of the air intake passage 12 at a downstream side of the throttle valve 16 and a speed sensor 44 for detecting a rotation speed (engine rotation speed NE) of an output shaft of the internal combustion engine 11. The vehicle 10 is also provided with an air flow meter 45 for detecting an amount of air introduced into a cylinder of the internal combustion engine 11 (intake air flow rate GA), an oxygen concentration sensor 46 for detecting an oxygen concentration of exhaust air OX as an index value of air fuel ratio, an operation switch 47, etc.

An electronic control unit 40 for controlling the operation of the vehicle 10 is installed on the vehicle 10. Output signals of various types of sensors are incorporated into the electronic control unit 40. The electronic control unit 40 performs various types of computations based on signals detected by various types of sensors and also performs various types of controls for operating the vehicle such as actuation control of the throttle valve 16 and actuation control of the first purge control valve 33A based on computation results thereof.

When forced induction is performed by using the forced-induction device 17, the pressure of the intake air Pa in the air intake passage 12 is increased. Thus, it is impossible to use the negative pressure of the intake air in the air intake passage 12 for supplying the negative pressure to the brake booster 20 and the fuel vapor treatment device 30. Therefore, the vehicle 10 is provided with an electric motor-driven type negative pressure pump 50 for producing the negative pressure. The negative pressure produced by the negative pressure pump 50 is supplied to the constant pressure chamber 23 of the brake booster 20 and the canister 32 of the fuel vapor treatment device 30. Actuation of the negative pressure pump 50 is controlled by the electronic control unit 40. In the first embodiment, supply of the negative pressure produced by the negative pressure pump 50 to the constant pressure chamber 23 and supply to the canister 32 are not performed at the same time.

Hereinafter, the negative pressure pump 50 and a peripheral structure thereof will be described in detail with reference to Fig. 1.

As shown in Fig. 1, an ejection port 51 of the negative pressure pump 50 is connected to an ejection passage 52. The ejection passage 52 is connected to a portion of the air intake passage 12 at an upstream side of the compressor 14, more specifically, a portion of the air intake passage 12 between the compressor 14 and the air filter 13. A suction passage 54 is connected to a suction port 53 of the negative pressure pump 50. The suction passage 54 is connected via a second purge passage 55 to the canister 32. Further, the suction passage 54 is connected via a second brake passage 56 to the constant pressure chamber 23 of the brake booster 20. In the first embodiment, the second purge passage 55 is equivalent to a communication passage that puts the canister 32 and the negative pressure pump 50 in communication, and the second brake passage 56 is equivalent to a communication passage that puts the constant pressure chamber 23 and the negative pressure pump 50 in communication.

The second purge passage 55 is provided with a second purge control valve 55A for opening and closing the second purge passage 55. When the second purge control valve 55A is opened, the suction passage 54 is put in communication with the canister 32 via the second purge passage 55. When the second purge control valve 55A is closed, communication of the suction passage 54 with the canister 32 via the second purge passage 55 is disconnected.

Further, the second brake passage 56 is provided with a brake negative pressure control valve 56A for opening and closing the second brake passage 56 and a check valve 56B. When the brake negative pressure control valve 56A and the check valve 56B are opened, the suction passage 54 is put in communication with the constant pressure chamber 23 via the second brake passage 56. When the brake negative pressure control valve 56A and the check valve 56B are closed, communication of the suction passage 54 with the constant pressure chamber 23 via the second brake passage 56 is disconnected. When the internal pressure of the second purge passage 55 is lower than the pressure of the constant pressure chamber 23 of the brake booster 20, the check valve 56B is opened. When the internal pressure of the second purge passage 55 is equal to or higher than the pressure of the constant pressure chamber 23 of the brake booster 20, the check valve 56B is closed.

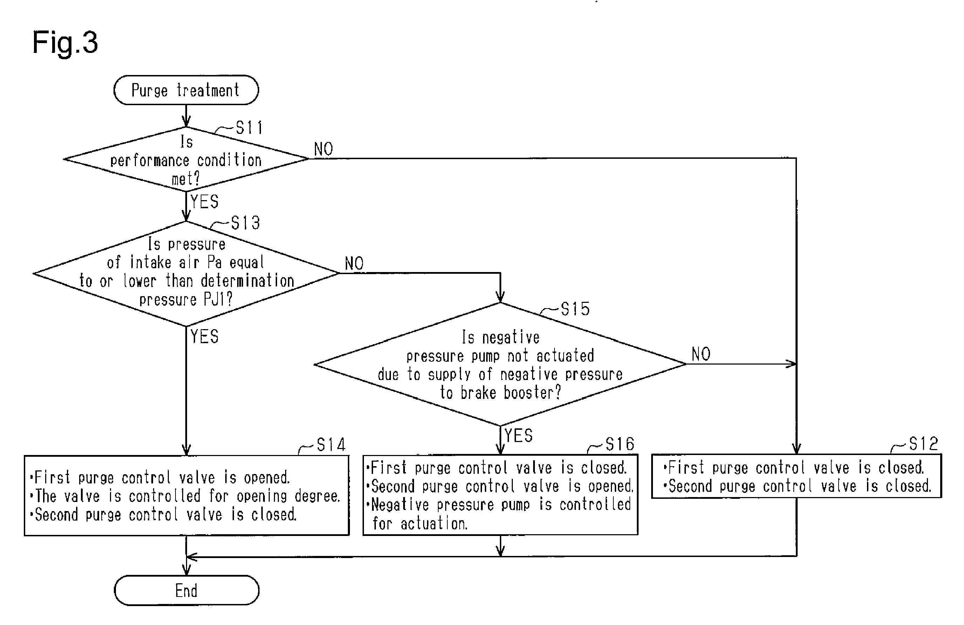

Hereinafter, purge treatment that releases a purge gas by the fuel vapor treatment device 30 will be described in detail with reference to Fig. 3.

A series of treatments shown in Fig. 3 is performed by the electronic control unit 40 as an interruption treatment at every predetermined cycle.

As shown in Fig. 3, first, a judgment is made for whether or not a condition of performing purge treatment is met (Step S11). In this case, when such conditions that the internal combustion engine 11 has completed warming-up, the internal combustion engine 11 is not operated at a high load region and the internal combustion engine 11 is in a steady operation state in which the operation state thereof undergoes a small change are met, it is judged that the condition of performing purge treatment is met.

When the above-described conditions are not met (Step S11: NO), both of the first purge control valve 33A and the second purge control valve 55A are closed (Step S12). In this case, there is performed neither supply of the negative pressure to the canister 32 by actuation of the negative pressure pump 50 nor supply of the negative pressure to the canister 32 by using the negative pressure of the intake air.

Thereafter, when this treatment is performed repeatedly to meet the above-described conditions (Step S11: YES), a judgment is made for whether or not the pressure of the intake air Pa in the air intake passage 12 is equal to or lower than a determination pressure PJ1 (Step S13). Based on results of various experiments and simulations, there is set, as the determination pressure PJ1, an upper limit of the pressure of the intake air Pa that has been determined in advance as a pressure value capable of releasing an adequate amount of purge gas into the air intake passage 12 by using the negative pressure of the intake air.

When the pressure of the intake air Pa is equal to or lower than the determination pressure PJ1 (Step S13: YES), a determination is made that an adequate amount of purge gas can be released by using the negative pressure of the intake air. The first purge control valve 33A is opened and also the second purge control valve 55A is closed (Step S14). Thereby, the purge gas is released into the air intake passage 12 by using the negative pressure of intake air. At this time, an amount of released purge gas (purge amount) is adjusted by controlling an opening degree of the first purge control valve 33A. The opening degree of the first purge control valve 33A is adjusted to give an opening degree capable of discharging an adequate amount of purge gas into the air intake passage 12, while variation in air fuel ratio due to release of the purge gas into the air intake passage 12 is suppressed based on the intake air flow rate GA, the engine rotation speed NE, the oxygen concentration of exhaust air OX and the pressure of the intake air Pa.

On the other hand, when the pressure of the intake air Pa is higher than the determination pressure PJ1 (Step S13: NO), a determination is made that release of a purge gas by using the negative pressure of the intake air will not obtain a sufficient amount of purge. If the negative pressure pump 50 is not actuated for supplying the negative pressure to the brake booster 20 (Step S15: YES), actuation of the negative pressure pump 50 is started for releasing the purge gas. In more detail, the first purge control valve 33A is closed, the second purge control valve 55A is opened, and actuation of the negative pressure pump 50 is controlled (Step S16). Thereby, the negative pressure produced by the negative pressure pump 50 is supplied to the canister 32 to release the purge gas into the air intake passage 12 by using the negative pressure. More specifically, the negative pressure produced by the negative pressure pump 50 is supplied to the canister 32, by which atmospheric air is introduced via the atmospheric air passage 34 into the canister 32. Thereby, fuel vapor inside the canister 32 is separated from an adsorbent by the introduced atmospheric air, released via the second purge passage 55 into the air intake passage 12 and subjected to purge treatment. At this time, an amount of purge is adjusted by controlling actuation of the negative pressure pump 50. The negative pressure pump 50 is adjusted to give an amount of actuation that is able to discharge an adequate amount of purge gas into the air intake passage 12, while variation in air fuel ratio due to release of the purge gas into the air intake passage 12 is suppressed based on the intake air flow rate GA, the engine rotation speed NE, the oxygen concentration of exhaust air OX and the pressure of the intake air Pa.

When the negative pressure pump 50 is actuated for supplying the negative pressure into the brake booster 20 (Step S15: NO), both of the first purge control valve 33A and the second purge control valve 55A are closed (Step S12). In this case, supply of the negative pressure to the canister 32 by actuation of the negative pressure pump 50 is not performed.

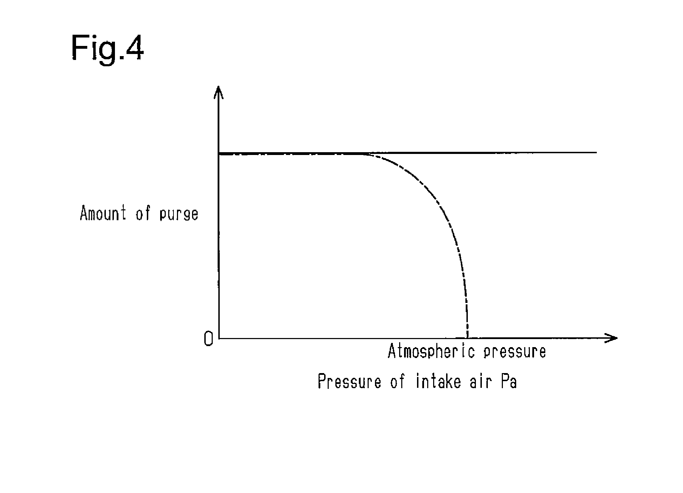

Fig. 4 shows one example that shows a relationship between the pressure of the intake air Pa and an amount of purge upon release of a purge gas. As shown by the alternate long and short dash line in Fig. 4, in a vehicle of a comparative example free of the negative pressure pump, when the pressure of the intake air Pa comes close to an atmospheric pressure, the amount of purge is lowered. And, when the pressure of the intake air Pa is equal to or higher than an atmospheric pressure, no purge gas can be released into the air intake passage 12. In contrast, the vehicle 10 of the first embodiment is provided with the negative pressure pump 50. Therefore, the negative pressure pump 50 is actuated at a region high in pressure of the intake air Pa to obtain an appropriate amount of purge without resorting to the pressure of the intake air Pa, as shown by the solid line in Fig. 4.

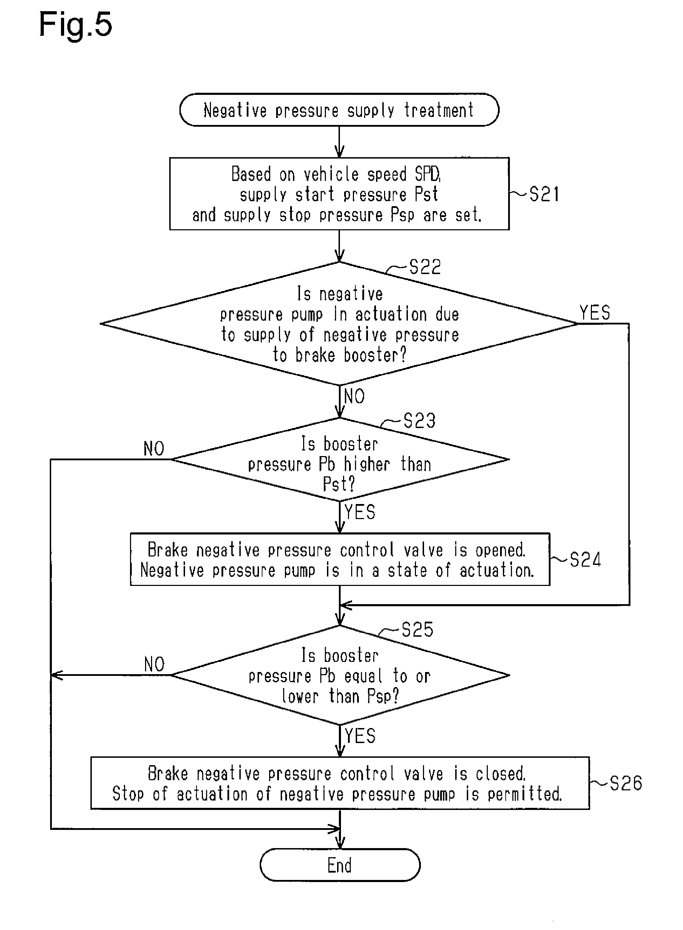

Next, negative pressure supplying treatment for supplying the negative pressure into the brake booster 20 will be described with reference to Fig. 5.

A series of treatments shown in Fig. 5 is performed by the electronic control unit 40 by performing an interruption treatment at every predetermined cycle.

As shown in Fig. 5, first, a supply start pressure Pst and a supply stop pressure Psp are set based on a vehicle speed SPD (Step S21). In the first embodiment, a relationship between the vehicle speed SPD and the booster pressure Pb that obtains an appropriate assistance force is determined based on results of various experiments and simulations. Further, in the relationship between the vehicle speed SPD and the booster pressure Pb, an upper limit of the booster pressure Pb is set as the supply start pressure Pst, and a pressure slightly lower than the supply start pressure Pst is set as the supply stop pressure Psp. In more detail, the relationship between the vehicle speed SPD and the supply start pressure Pst and the relationship between the vehicle speed SPD and the supply stop pressure Psp are stored in advance at the electronic control unit 40, and the supply start pressure Pst and the supply stop pressure Psp are set based on these relationships. More specifically, the higher the vehicle speed SPD is, the lower the supply start pressure Pst or the supply stop pressure Psp is set.

Then, when no treatment is performed for supplying the negative pressure produced by the negative pressure pump 50 to the constant pressure chamber 23 of the brake booster 20 (Step S22: NO) and also when the booster pressure Pb is equal to or lower than the supply start pressure Pst (Step S23:NO), subsequent treatment is not performed. In this case, the treatment for supplying the negative pressure produced by the negative pressure pump 50 into the constant pressure chamber 23 of the brake booster 20 is not performed.

Thereafter, when this treatment is performed repeatedly and the booster pressure Pb is higher than the supply start pressure Pst (Step S23: YES), the brake negative pressure control valve 56A is opened and the negative pressure pump 50 is actuated (Step S24). Thereby, the negative pressure produced by the negative pressure pump 50 is supplied via the second brake passage 56 to the constant pressure chamber 23 of the brake booster 20.

In a subsequent period of time during which the booster pressure Pb is higher than the supply stop pressure Psp (Step S25: NO), the treatment of Step S26 is skipped. In this period of time, a state in which the brake negative pressure control value 56A is opened and a state in which the negative pressure pump 50 is actuated are maintained, and the negative pressure is continuously supplied to the constant pressure chamber 23 of the brake booster 20.

Thereafter, when the booster pressure Pb is equal to or lower than the supply stop pressure Psp (Step S25: YES), the brake negative pressure control valve 56A is closed and also stopping actuation of the negative pressure pump 50 is permitted (Step S26). Thereby, supply of the negative pressure produced by the negative pressure pump 50 to the constant pressure chamber 23 of the brake booster 20 is stopped. At this time, if no request has been made for actuating the negative pressure pump 50 for the release of a purge gas, actuation of the negative pressure pump 50 is stopped.

Therefore, according to the first embodiment, the effects given below are obtained.
(1) The suction port 53 of the negative pressure pump 50 is connected to the canister 32 of the fuel vapor treatment device 30 and the constant pressure chamber 23 of the brake booster 20. Further, the ejection port 51 of the negative pressure pump 50 is connected to the air intake passage 12 of the internal combustion engine 11. Therefore, it is possible to supply the negative pressure to the canister 32 of the fuel vapor treatment device 30 and also supply the negative pressure to the constant pressure chamber 23 of the brake booster 20 by using the common negative pressure pump 50. Therefore, although being provided with the fuel vapor treatment device 30 and the brake booster 20 as a device that uses a pressure pump, the vehicle 10 can be made simple in structure as compared with a vehicle in which a pressure pump is installed on each device.
   Further, the second purge control valve 55A for opening and closing the second purge passage 55 is installed in the second purge passage 55, which puts the canister 32 and the negative pressure pump 50 in communication. Still further, the brake negative pressure control valve 56A is installed in the second brake passage 56, which puts the constant pressure chamber 23 and the negative pressure pump 50 in communication. When the negative pressure produced by the negative pressure pump 50 is supplied to the canister 32 of the fuel vapor treatment device 30, the brake negative pressure control valve 56A is closed. Therefore, no negative pressure produced by the negative pressure pump 50 is supplied to the constant pressure chamber 23 of the brake booster 20. Further, when the negative pressure produced by the negative pressure pump 50 is supplied to the constant pressure chamber 23 of the brake booster 20, the second purge control valve 55A is closed. Therefore, no negative pressure produced by the negative pressure pump 50 is supplied to the canister 32 of the fuel vapor treatment device 30. As described so far, when only one of supply of the negative pressure produced by the negative pressure pump 50 to the canister 32 and supply thereof to the constant pressure chamber 23 is performed, a control valve corresponding to a device for which no request for performance is made is closed, and negative pressure is not unnecessarily supplied to a device for which no request for performance is made. Thus, the negative pressure pump 50 can be actuated at a low load.
(2) The canister 32 of the fuel vapor treatment device 30 and the constant pressure chamber 23 of the brake booster 20 are connected to a portion of the air intake passage 12 at a downstream side of the throttle valve 16 in separation from the suction port 53 of the negative pressure pump 50. Therefore, when the pressure of the intake air Pa at the portion of the air intake passage 12 at the downstream side of the throttle valve 16 is lower, it is possible to supply the negative pressure to the canister 32 of the fuel vapor treatment device 30 and also supply the negative pressure to the constant pressure chamber 23 of the brake booster 20 by using the negative pressure of the intake air in the air intake passage 12. Thereby, the negative pressure pump 50 can be reduced in load.
(3) When a purge gas is released into the air intake passage 12 and if the pressure of the intake air Pa in the air intake passage 12 is equal to or lower than the determination pressure PJ1, the second purge control valve 55A is closed, and if the pressure of the intake air Pa is higher than the determination pressure PJ1, the second purge control valve 55A is opened. That is, when the air intake passage 12 is low in pressure of the intake air Pa and the negative pressure of the intake air is used to release a purge gas, and also when a purge gas is expected to be released sufficiently, influences by the second purge passage 55 and the negative pressure pump 50 are cut off and the negative pressure of the intake air can be used to release the purge gas by the fuel vapor treatment device 30. On the other hand, when the air intake passage 12 is high in pressure of the intake air Pa and a purge gas is not expected to be released sufficiently upon release of the purge gas by using the negative pressure of the intake air, the second purge control valve 55A is opened. Therefore, the negative pressure produced by the negative pressure pump 50 can be used to release a purge gas by the fuel vapor treatment device 30. As described so far, when the negative pressure of the intake air can be used, the negative pressure of the intake air is to be used. And, when no negative pressure of the intake air can be used, the negative pressure pump 50 is actuated to use the negative pressure produced by the negative pressure pump 50. Thereby, it is possible to lower loads of the negative pressure pump 50 and also release a purge gas by the fuel vapor treatment device 30.
(4) On the assumption that the ejection port 51 of the negative pressure pump 50 is connected to a portion of the air intake passage 12 at a downstream side of the throttle valve 16, a gas ejected from the negative pressure pump 50 is introduced into a portion at a downstream side of the throttle valve 16, which adjusts an the intake air flow rate. Therefore, the intake air flow rate may be easily decreased in adjustment accuracy. In the first embodiment, with this point taken into account, the ejection port 51 of the negative pressure pump 50 is connected to a portion of the air intake passage 12 at an upstream side of the throttle valve 16. Therefore, the gas ejected from the negative pressure pump 50 is introduced into a portion at the upstream side of a portion that adjusts the intake air flow rate. It is, thereby, possible to prevent the accuracy of adjusting the intake air flow rate from being decreased due to introduction of the gas into the air intake passage 12. Accordingly, it is possible to introduce the gas from the negative pressure pump 50 to the air intake passage 12, with an unnecessary variation in the intake air flow rate suppressed.
(5) The air intake passage 12 is provided with a compressor 14. Therefore, while a portion of the air intake passage 12 at a downstream side of the compressor 14 greatly varies in pressure depending on an operation state of the internal combustion engine 11, a portion thereof at an upstream side of the compressor 14 hardly varies in pressure. In the vehicle 10, the ejection port 51 of the negative pressure pump 50 is connected to the portion of the air intake passage 12 at the upstream side of the compressor 14. In this case, the ejection port 51 of the negative pressure pump 50 is connected to a portion of the air intake passage 12 at which the pressure varies to a small extent. It is, thus, possible to actuate the negative pressure pump 50 efficiently in a stable actuation state. As a result, an amount of purge can be accurately adjusted by controlling actuation of the negative pressure pump 50.
(6) The negative pressure pump 50 can be switched during operation of the internal combustion engine 11 between a state in actuation and a state out of actuation. Therefore, when the negative pressure of the intake air of the air intake passage 12 can be used to supply the negative pressure to the constant pressure chamber 23 of the brake booster 20 or supply the negative pressure into the canister 32, that is, when the negative pressure pump 50 is not required for actuation, the negative pressure pump 50 can be stopped for actuation. It is, thereby, possible to effectively reduce loads of the negative pressure pump 50.

### (Second embodiment)

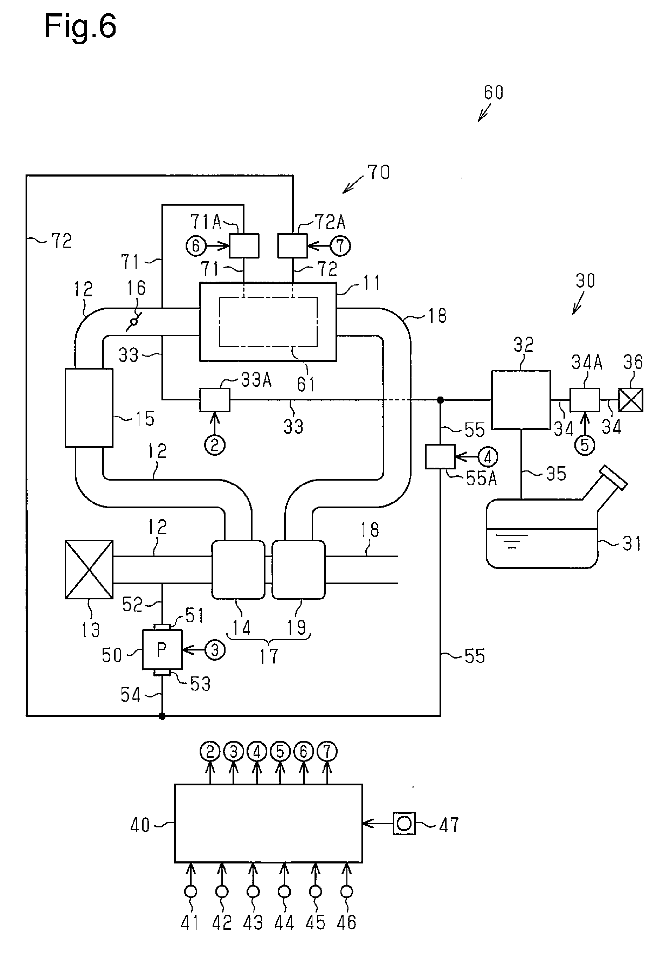

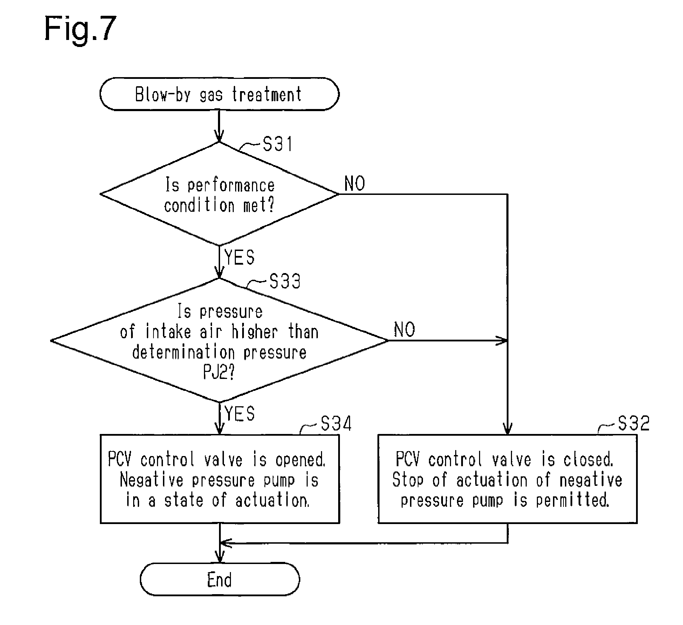

Hereinafter, a second embodiment, which specifically embodies a vehicle of the present invention, will be described, with an emphasis placed on a difference from that of the first embodiment, with reference to Fig. 6 and Fig. 7.

In the vehicle of the first embodiment, the negative pressure pump is connected to the interior of the fuel vapor treatment device and that of the brake booster. In contrast, in the second embodiment, the negative pressure pump is connected to the interior of a fuel vapor treatment device and that of a blow-by gas treatment device.

In a vehicle 60 shown in Fig. 6, portions other than a blow-by gas treatment device 70 are similar in arrangement to those of the vehicle 10 of the first embodiment. Therefore, portions similar to those of the first embodiment will be given the same reference numerals, with a detailed description omitted here.

As shown in Fig. 6, the vehicle 60 is provided with the blow-by gas treatment device 70.

The blow-by gas treatment device 70 uses negative pressure, thereby releasing a blow-by gas inside a crankcase 61 of an internal combustion engine 11 into an air intake passage 12. The blow-by gas is a gas that leaks from inside a cylinder of the internal combustion engine 11 into the crankcase 61 in the course of compression and expansion of the internal combustion engine 11, or a gas that contains a fuel component and an oil component.

The blow-by gas treatment device 70 is provided with a first gas discharge passage 71, which puts a portion of the air intake passage 12 at a downstream side of a throttle valve 16 and the interior of the crankcase 61 in communication. A PCV valve 71 A, which opens and closes the first gas discharge passage 71, is installed in the first gas discharge passage 71. The PCV valve 71 A is a valve that is actuated by a difference in pressure. The higher the pressure between the PCV valve 71 A and the crankcase 61 in the first gas discharge passage 71, that is, the pressure on the side of the case, in relation to the pressure between the PCV valve 71 A and the air intake passage 12, that is, the pressure on the side of the passage, the smaller the opening degree of the PCV valve 71 A is. Further, when the pressure on the side of the case is equal to or lower than the pressure on the side of the passage, the PCV valve 71 A is closed.

When the pressure on the side of the case is higher than the pressure on the side of the passage to open the PCV valve 71 A, the interior of the crankcase 61 is put in communication with the interior of the air intake passage 12 via the first gas discharge passage 71. Therefore, a blow-by gas inside the crankcase 61 is released via the first gas discharge passage 71 into the air intake passage 12. On the other hand, when the pressure on the side of the case is equal to or lower than the pressure on the side of the passage to close the PCV valve 71A, communication of the interior of the crankcase 61 with the air intake passage 12 by the first gas discharge passage 71 is disconnected. As a result, there is no release of the blow-by gas into the air intake passage 12 from the interior of the crankcase 61 via the first gas discharge passage 71.

When forced induction is performed by a forced-induction device 17, the air intake passage 12 is increased in pressure of the intake air Pa to increase the pressure on the side of the passage. Therefore, no negative pressure of the intake air can be used for releasing the blow-by gas by the blow-by gas treatment device 70. As a result, the negative pressure produced by the negative pressure pump 50 is used for releasing the blow-by gas by the blow-by gas treatment device 70. Supply of the negative pressure produced by the negative pressure pump 50 to the blow-by gas treatment device 70 and supply thereof to the canister 32 of the fuel vapor treatment device 30 may be performed at the same time, or one of the above-described cases of the supply may be performed selectively.

Hereinafter, the negative pressure pump 50 and a peripheral structure thereof will be described in detail, with reference to Fig. 6.

As shown in Fig. 6, the blow-by gas treatment device 70 is provided with a second gas discharge passage 72 that puts a suction passage 54 connected to the suction port 53 of the negative pressure pump 50 and the interior of the crankcase 61 in communication, in separation from the first gas discharge passage 71. In the second embodiment, the second gas discharge passage 72 is equivalent to a communication passage that puts the interior of the internal combustion engine 11 and the negative pressure pump 50 in communication. Further, a PCV control valve 72A, which opens and closes the second gas discharge passage 72, is installed in the second gas discharge passage 72. When the PCV control valve 72A is opened, the suction passage 54 is put in communication with the crankcase 61 via the second gas discharge passage 72. When the PCV control valve 72A is closed, communication of the suction passage 54 with the crankcase 61 via the second gas discharge passage 72 is disconnected. When the negative pressure pump 50 is actuated in a state in which the PCV control valve 72A is opened, the blow-by gas inside the crankcase 61 is released via the second gas discharge passage 72, the suction passage 54 and an ejection passage 52 into the air intake passage 12 by the negative pressure produced by the negative pressure pump 50.

Hereinafter, blow-by gas treatment, which releases a blow-by gas by using the negative pressure produced by the negative pressure pump 50, will be described with reference to Fig. 7.

A series of treatments shown in Fig. 7 is performed by an electronic control unit 40 as interruption treatment at every predetermined cycle.

As shown in Fig. 7, first, a judgment is made for whether or not a condition for performing the blow-by gas treatment is met (Step S31). A condition that a period of time during which the negative pressure produced by the negative pressure pump 50 is supplied to the second gas discharge passage 72 by this treatment and a period of time during which the negative pressure is supplied to the canister 32 by the purge treatment shown in Fig. 3 do not overlap is set as the condition for performing the blow-by gas treatment.

When the above-described performance condition is not met (Step S31: NO), the PCV control valve 72A is closed and stop of actuation of the negative pressure pump 50 is permitted (Step S32). In this case, the blow-by gas is not released by using the negative pressure produced by the negative pressure pump 50. At this time, on a condition that there is made no request for actuating the negative pressure pump 50 for the purpose of releasing a purge gas, actuation of the negative pressure pump 50 is stopped.

Thereafter, when this treatment is repeated to meet the performance condition (Step S31: YES), a judgment is made for whether or not the pressure of the intake air Pa is higher than a determination pressure PJ2 (Step S33). Based on results obtained from various types of experiments and simulations, there is set as the determination pressure PJ2 an upper limit of the pressure of the intake air Pa obtained in advance as a pressure value capable of releasing an adequate amount of blow-by gas into the air intake passage 12 by using the negative pressure of the intake air.

When the pressure of the intake air Pa is higher than the determination pressure PJ2 (Step S33: YES), a determination is made that release of a blow-by gas by using the negative pressure of the intake air is not able to reliably release a sufficient amount of the gas. Then, the PCV control valve 72A is opened and actuation of the negative pressure pump 50 for releasing the blow-by gas is started (Step S34). Thereby, the negative pressure produced by the negative pressure pump 50 is supplied to the second gas discharge passage 72, and the blow-by gas is released into the air intake passage 12 by using the negative pressure.

On the other hand, when the pressure of the intake air Pa is equal to or lower than the determination pressure PJ2 (Step S33: NO), a determination is made that an adequate amount of the blow-by gas can be released by using the negative pressure of the intake air. Then, the PCV control valve 72A is closed and stop of actuation of the negative pressure pump 50 is permitted (Step S32). In this case, the blow-by gas is not released into the air intake passage 12 by using the negative pressure produced by the negative pressure pump 50, but the blow-by gas is released into the air intake passage 12 by using the negative pressure of the intake air.

Therefore, according to the second embodiment, in addition to the effects of (3) to (5) that have been so far described, the effects of (7) to (9) described below will be obtained.
(7) The suction port 53 of the negative pressure pump 50 is connected to the canister 32 of the fuel vapor treatment device 30 and the second gas discharge passage 72 of the blow-by gas treatment device 70. Further, the ejection port 51 of the negative pump 50 is connected to the air intake passage 12 of the internal combustion engine 11. Therefore, it is possible to supply the negative pressure to the canister 32 of the fuel vapor treatment device 30 and also supply the negative pressure to the second gas discharge passage 72 of the blow-by gas treatment device 70 by using the common negative pressure pump 50. Therefore, although being provided with the fuel vapor treatment device 30 and the blow-by gas treatment device 70 as a device that uses a pressure pump, the vehicle 60 can be made simple in structure as compared with a vehicle in which a pressure pump is installed on each device.

Further, a second purge control valve 55A for opening and closing the second purge passage 55 is installed in the second purge passage 55 that puts the canister 32 and the negative pressure pump 50 in communication. Still further, the PCV control valve 72A is installed in the second gas discharge passage 72 that puts the crankcase 61 and the negative pressure pump 50 in communication. When the negative pressure produced by the negative pressure pump 50 is supplied to the canister 32 of the fuel vapor treatment device 30, the PCV control valve 72A is closed. Therefore, the negative pressure produced by the negative pressure pump 50 is not supplied to the crankcase 61. And, when the negative pressure produced by the negative pressure pump 50 is supplied to the second gas discharge passage 72 of the blow-by gas treatment device 70, the second purge control valve 55A is closed. Thus, the negative pressure produced by the negative pressure pump 50 is not supplied to the canister 32 of the fuel vapor treatment device 30. As described so far, when there is performed only one of supply of the negative pressure produced by the negative pressure pump 50 to the canister 32 and supply thereof to the second gas discharge passage 72, a control valve corresponding to a device for which no request for performance is made is closed, and negative pressure is not unnecessarily supplied to the device for which no request for performance is made. Therefore, it is possible to actuate the negative pressure pump 50 at a low load.
(8) When the portion of the air intake passage 12 at the downstream side of the throttle valve 16 is lower in pressure of the intake air Pa, it is possible to supply the negative pressure to the canister 32 of the fuel vapor treatment device 30 and also supply the negative pressure to the first gas discharge passage 71 of the blow-by gas treatment device 70 by using the negative pressure of the intake air in the air intake passage 12. Thereby, the negative pressure pump 50 can be reduced in load.
(9) The negative pressure pump 50 can be switched during operation of the internal combustion engine 11 between a state in actuation and a state out of actuation. Therefore, when the negative pressure of the intake air in the air intake passage 12 can be used to supply the negative pressure into the canister 32 and also supply the negative pressure to the first gas discharge passage 71, that is, when the negative pressure pump 50 is not required for actuation, actuation of the negative pressure pump 50 can be stopped. Thereby, it is possible to effectively reduce the load of the negative pressure pump 50.

Each of the above-described embodiments may be modified as follows.

In the first embodiment, not only one of supply of the negative pressure of the intake air into the constant pressure chamber 23 of the brake booster 20 and supply of the negative pressure produced by the negative pressure pump 50 may be performed selectively, but also a period of time may be set during which both cases of the supply of the negative pressure are performed at the same time.

In the first embodiment, the first purge passage 33 and the first purge control valve 33A may be omitted, or the first brake passage 25 and the check valve 25A may be omitted.

Further, the first purge passage 33, the first purge control valve 33A, the first brake passage 25 and the check valve 25A may be all omitted.

In the first embodiment, the brake booster 20 may be changed in structure in any way, as long as it is structured to be actuated by supplying the negative pressure to the pressure chamber.

In the first embodiment, the actuator that is actuated by using the negative pressure supplied to the pressure chamber may be any actuator, in addition to the brake booster 20.

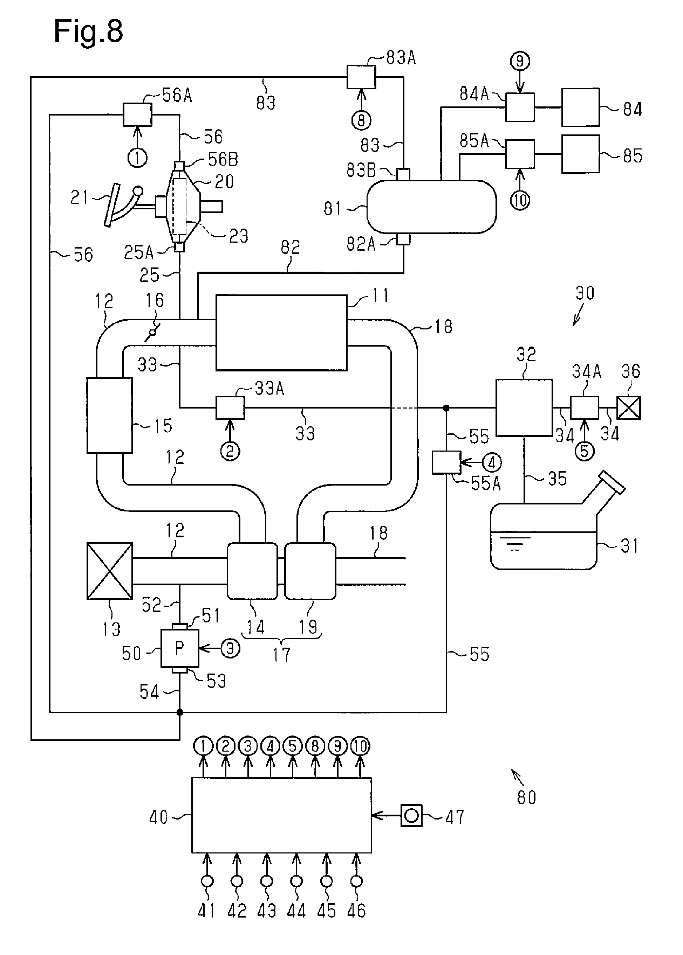

Fig. 8 shows one example of a vehicle on which the above-described actuator is installed. As shown in Fig. 8, a vehicle 80 is provided with a negative pressure tank 81. The vehicle 80 is also provided with a first tank introduction passage 82, which puts a portion of an air intake passage 12 at a downstream side of a throttle valve 16 and the negative pressure tank 81 in communication, and a check valve 82A, which permits introduction of the negative pressure from the first tank introduction passage 82 to the negative pressure tank 81 and also regulates leakage of the negative pressure from the negative pressure tank 81 to the first tank introduction passage 82. Therefore, when the pressure inside the negative pressure tank 81 is higher than the pressure of the intake air Pa, the check valve 82A is opened. And, the negative pressure of the intake air in the air intake passage 12 is supplied via the first tank introduction passage 82 into the negative pressure tank 81.

The vehicle 80 is also provided with a second tank introduction passage 83, which puts a suction passage 54 to which a suction port 53 of a negative pressure pump 50 is connected and the negative pressure tank 81 in communication, a tank negative pressure control valve 83A, which opens and closes the second tank introduction passage 83, and a check valve 83B.

When the tank negative pressure control valve 83A and the check valve 83B are opened, the suction port 53 of the negative pressure pump 50 is put in communication with the negative pressure tank 81 via the second tank introduction passage 83. When the negative pressure control valve 83A and the check valve 83B are closed, communication of the suction port 53 of the negative pressure pump 50 with the negative pressure tank 81 via the second tank introduction passage 83 is disconnected. When the negative pressure pump 50 is actuated in a state in which the tank negative pressure control valve 83A is opened, the check valve 83B is opened by negative pressure produced by the negative pressure pump 50. The negative pressure produced by the negative pressure pump 50 is supplied via the suction passage 54 and the second tank introduction passage 83 to the negative pressure tank 81.

Further, a waste gate valve 84 which is actuated by supply of the negative pressure to a pressure chamber is coupled to a negative pressure tank 81 via a first negative pressure control valve 84A. Still further, an engine mount 85, which is able to change vibration control characteristics by supplying or discharging the negative pressure to the pressure chamber, is connected to the negative pressure tank 81 via a second negative pressure control valve 85A. In the example shown in Fig. 8, the brake booster 20, the waste gate valve 84 and the engine mount 85 are equivalent to the actuator. In the vehicle 80, the negative pressure can be supplied to a fuel vapor treatment device 30, a brake booster 20, a waste gate valve 84 and an engine mount 85 by using the common negative pressure pump 50. Therefore, the vehicle 80 can be made simple in structure.

In the second embodiment, not only one of supply of the negative pressure of the intake air to the first gas discharge passage 71 of the blow-by gas treatment device 70 and supply of the negative pressure produced by the negative pressure pump 50 may be performed selectively but also a period of time may be set during which both cases of the supply are performed at the same time.

In the second embodiment, the first purge passage 33 and the first purge control valve 33A may be omitted, or the first gas discharge passage 71 and the PCV valve 71 A may be omitted. Further, the first purge passage 33, the first purge control valve 33A, the first gas discharge passage 71 and the PCV valve 71 A may be all omitted.

In the second embodiment, the determination pressure PJ2 may be set depending on an operation state of the internal combustion engine 11 (intake air flow rate GA, engine rotation speed NE, etc.).

In each of the above-described embodiments, not only one of release of purge gas by using the negative pressure of the intake air and release of purge gas by using the negative pressure produced by the negative pressure pump 50 may be performed selectively, but also a period of time may be set during which both cases of the release are performed at the same time.

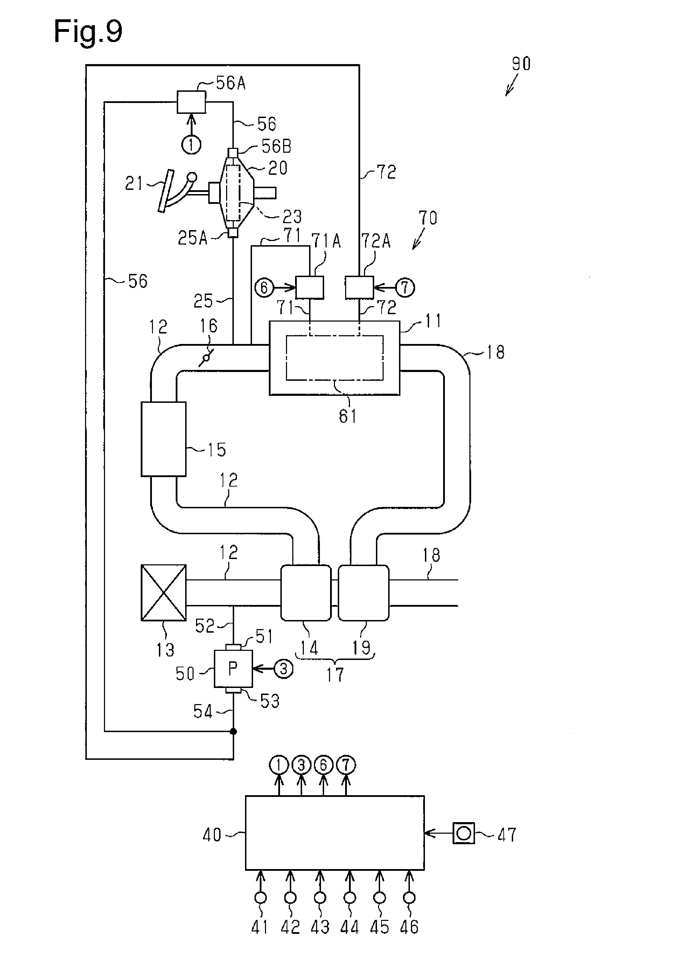

As shown in Fig. 9, in a vehicle 90 that is provided with a brake booster 20 and a blow-by gas treatment device 70, a second brake passage 56 having a brake negative pressure control valve 56A and a second gas discharge passage 72 having a PCV control valve 72A may be individually connected to a suction port 53 of a negative pressure pump 50. According to the vehicle 90, it is possible to supply negative pressure to a constant pressure chamber 23 of the brake booster 20 and also supply negative pressure to the second gas discharge passage 72 of the blow-by gas treatment device 70 by using the common negative pressure pump 50. Therefore, although being provided with the brake booster 20 and the blow-by gas treatment device 70 as a device that uses a pressure pump, the vehicle 90 can be made simple in structure as compared with a vehicle in which a pressure pump is installed on each device. Further, when only one of supply of the negative pressure produced by the negative pressure pump 50 to the second gas discharge passage 72 and supply thereof to the constant pressure chamber 23 is performed, a control valve (the brake negative pressure control valve 56A or the PCV control valve 72A) corresponding to a device for which no request for performance is made is closed, and negative pressure is not unnecessarily supplied to the device for which no request for performance is made. Therefore, it is possible to actuate the negative pressure pump 50 at a low load.

In each of the above-described embodiments, the ejection passage 52 may be connected to a portion of the air intake passage 12 at a downstream side of the compressor 14. The ejection passage 52 may also be connected to a portion of the air intake passage 12 at the downstream side of the throttle valve 16.

In each of the above-described embodiments, the negative pressure pump 50 may adopt a pump with any given structure such as an engine-driven type pump, which is driven by an output shaft of the internal combustion engine 11. When the engine-driven type negative pressure pump is adopted, it is desirable to install a clutch mechanism that connects an output shaft of the engine with an input shaft of the pump and disconnects the connection thereof. In a vehicle with the above-described mechanism, when the negative pressure pump is not required for actuation, the clutch mechanism is switched to a state in which no power is transmitted, thus making it possible to reduce loads of the negative pressure pump. When a negative pressure pump that is unable to adjust freely an amount of the intake air fed under pressure is adopted, it is desirable to adopt a control valve capable of adjusting the opening degree freely as the second purge control valve 55A and the PCV control valve 72A. In the above-described vehicle, an amount of purge can be adjusted by controlling the opening degree of the second purge control valve 55A, and a blow-by gas can be adjusted for an amount of the gas to be released by controlling the opening degree of the PCV control valve 72A.

In each of the above-described embodiments, the vehicle may be provided with the fuel vapor treatment device 30, an actuator such as the brake booster 20 and the blow-by gas treatment device 70. In this case, the second purge passage 55, which has the second purge control valve 55A, the second brake passage 56, which has the brake negative pressure control valve 56A, and the second gas discharge passage 72, which has the PCV control valve 72A, may be individually connected to the suction port 53 of the negative pressure pump 50.

In each of the above-described embodiments, the vehicle may be a vehicle having an engine-driven type forced-induction device in which a compressor is driven by an output shaft of the internal combustion engine 11 or may be a vehicle on which the forced-induction device or the intercooler 15 is not installed.

The vehicle is provided with a canister, a fuel vapor treatment device, a brake booster, which has a constant pressure chamber to which a negative pressure is supplied and is actuated by using a negative pressure supplied to the constant pressure chamber, and a negative pressure pump. The negative pressure pump is provided with a suction port, which is connected to the canister and to the constant pressure chamber, and an ejection port, which is connected to the air intake passage. A second purge control valve for opening and closing a second purge passage is installed in the second purge passage, which puts the canister and the negative pressure pump in communication. A brake negative pressure control valve is installed in the second brake passage, which puts the constant pressure chamber and the negative pressure pump in communication.

## Claims

1. A vehicle (10) being **characterized by**:
an internal combustion engine (11);
a plurality of devices (20,30,70) that use negative pressure;
a negative pressure pump (50), which produces negative pressure wherein the negative pressure pump (50) has an ejection port (51), which is connected to an air intake passage (12) of the internal combustion engine (11), and a suction port (53), which is connected to each of the plurality of devices (20,30,70), and ;
a plurality of communication passages (55,56,72), which put the plurality of devices (20,30,70) and the suction port (53) of the negative pressure pump (50) in communication; and
a plurality of control valves (55A,56A,72A), each of which is installed in a respective one of the plurality of communication passages (55,56,72) to open and close the respective one of the plurality of communication passages(55,56,72).

2. The vehicle (10) according to Claim 1, further being **characterized by**:
a fuel tank (31); and
a canister (32) that collects fuel vapor produced inside the fuel tank (31);
the plurality of devices including a fuel vapor treatment device (30) that uses a negative pressure to release the fuel vapor collected by the canister (32) into the air intake passage (12) and an actuator (20) that has a pressure chamber (23,24) to which a negative pressure is supplied, wherein the actuator (20) is actuated by using the negative pressure supplied to the pressure chamber (23,24), and
the plurality of control valves including a purge control valve (55A) installed in a communication passage (55) that puts the canister (32) and the negative pressure pump (50) in communication and a negative pressure control valve (56A) installed in a communication passage (56) that puts the pressure chamber (23) of the actuator (20) and the negative pressure pump (50) in communication.

3. The vehicle (10) according to Claim 1, further being **characterized by**:
a fuel tank (31); and
a canister (32) that collects fuel vapor produced inside the fuel tank (31);
the plurality of devices including a fuel vapor treatment device (30) that uses a negative pressure to release the fuel vapor collected by the canister (32) into the air intake passage (12), and a blow-by gas treatment device (70) that uses a negative pressure to release a blow-by gas inside the internal combustion engine (11) into the air intake passage (12), and
the plurality of control valves including a purge control value (55A) installed in a communication passage (55) that puts the canister (32) and the negative pressure pump (50) in communication and a PCV control valve (72A) installed in a communication passage (72) that puts the interior of the internal combustion engine (11) and the negative pressure pump (50) in communication.

4. The vehicle (10) according to Claim 1, being **characterized in that** the plurality of devices include a blow-by gas treatment device (70), which uses a negative pressure to release a blow-by gas inside the internal combustion engine (11) into the air intake passage (12), and an actuator (20) that has a pressure chamber (23,24) to which a negative pressure is supplied, wherein the actuator (20) is actuated by using the negative pressure supplied to the pressure chamber (23,24), and the plurality of control valves include a PCV control valve (72A) installed in a communication passage (72) that puts the interior of the internal combustion engine (11) and the negative pressure pump (50) in communication and a negative pressure control valve (56A) installed in a communication passage (56) that puts the pressure chamber (23) of the actuator (20) and the negative pressure pump (50) in communication.

5. The vehicle (10) according to any one of Claims 1 to 4, being **characterized in that** at least one of the plurality of devices is connected to a portion of the air intake passage (12) at a downstream side of a throttle valve (16), in separation from the suction port (53) of the negative pressure pump (50).

6. The vehicle (10) according to Claim 2 or 3, being **characterized in that** the canister (32) is connected to a portion of the air intake passage (12) at a downstream side of a throttle valve (16) in separation from the suction port (53) of the negative pressure pump (50), and when the fuel vapor treatment device (30) is used to release fuel vapor into the air intake passage (12) and if a pressure (Pa) at the portion of the air intake passage (12) at the downstream side of the throttle valve (16) is equal to or lower than a determination pressure(PJ1), the purge control valve (55A) is closed, and if a pressure (Pa) at the portion of the air intake passage (12) at the downstream side of the throttle valve (16) is higher than the determination pressure, the purge control valve (55A) is opened.

7. The vehicle (10) according to any one of Claims 1 to 6, being **characterized in that** the ejection port (51) of the negative pressure pump (50) is connected to a portion of the air intake passage (12) at an upstream side of the throttle valve (16).

8. The vehicle (10) according to any one of Claims 1 to 7, being **characterized in that** the air intake passage (12) is provided with a compressor (14), which feeds the intake air under pressure, and the ejection port (51) of the negative pressure pump (50) is connected to a portion of the air intake passage (12) at the upstream side of the compressor (14).

9. The vehicle (10) according to any one of Claims 1 to 8, being **characterized in that** the negative pressure pump (50) is a pump that is capable of switching during operation of the internal combustion engine (11) between a state in actuation and a state out of actuation.
